# EUROPÄISCHE PATENTSCHRIFT

(11) **EP 2 727 769 B1**
(45) Veröffentlichungstag und Bekanntmachung des Hinweises auf die Patenterteilung: **13.04.2016**
(21) Anmeldenummer: 13180992.3
(22) Anmeldetag: 20.08.2013
(51) Int. Cl.: B60Q 1/076, F16C 11/06

(54) **Kugelgelenk zur Lagerung einer Scheinwerferkomponente**
Ball joint used as a bearing for a headlamp component
Articulation à rotule pour le logement d'un composant de phare

(30) Priorität: 31.10.2012 AT 504842012
(43) Veröffentlichungstag der Anmeldung: 07.05.2014
(73) Patentinhaber: Zizala Lichtsysteme GmbH, 3250 Wieselburg (AT)
(72) Erfinder: Mayer, Matthias, 3240 Mank (AT); Blamauer, Christian, 3345 Göstling (AT)
(74) Vertreter: Patentanwaltskanzlei Matschnig & Forsthuber OG

(56) Entgegenhaltungen:
- EP-A1- 1 582 182
- FR-A1- 2 013 495
- FR-A1- 2 430 221
- US-A- 3 007 747
- US-A1- 2011 315 008
- US-B1- 6 247 868
- US-B2- 7 452 154

## Beschreibung

Die Erfindung betrifft eine Gelenkverbindung zur Lagerung einer Scheinwerferkomponente in einem Scheinwerfer. Genauer gesagt betrifft die Erfindung eine Gelenkverbindung in einer verstellbaren Halterung für eine optische Komponente eines Scheinwerfers, aufweisend einen Gelenkkopf und eine Lagerschale, wobei der Gelenkkopf in der Lagerschale in drehbar gelagerter Weise beweglich ist.

Verstellbare Halterungen für optische Scheinwerferkomponenten sind wohlbekannt und werden verwendet, um den Lichtweg des von dem Scheinwerfer erzeugten Lichtbündels einzustellen. Als optische Komponente wird hier ein Bauteil eines Scheinwerfers verstanden, das an der Erzeugung und/oder Gestaltung des in dem Scheinwerfer erzeugten Lichts teilnimmt und zur Gänze oder teilweise in dem optischen Lichtweg des Lichtbündels positioniert ist. Insbesondere kann die optische Komponente ein Leuchtmittel, eine Linse, ein Reflektor oder eine (das Lichtbündel beschränkende) Blende sein.

Einer verstellbaren Halterung kann beispielsweise durch ein Stellmotor betätigt werden, der eine Komponente der Halterung verstellt; diese Verstellbewegung überträgt sich nach Art eines Getriebes verbundene Komponenten der Halterung auf die optische Komponente. Eine der beteiligten Getriebekomponenten kann insbesondere eine Kugelgelenkverbindung sein.

Bekannte Kugelgelenkverbindungen werden dadurch zusammengefügt, dass der Gelenkkopf unter Kraftaufwand in die Lagerschale eingepresst wird. Die Lagerschale muss dabei vorübergehend elastisch nachgeben. Dies erfordert einen hohen Kraftaufwand, der häufig zu einer Belastung der übrigen Komponenten des Lagersystems der Scheinwerferkomponente führt, die weit über den Belastungen während des eigentlichen Betriebs des Scheinwerfers liegt. Es besteht daher ein hohes Risiko der Beschädigung der Lagerschale und/oder des Lagersystems, insbesondere des erwähnten Stellmotors, während der Montage der Halterung bzw. der Gelenkverbindung.

Es ist daher eine Aufgabe der Erfindung, den Vorgang des Montierens der Schweinwerferkomponente, insbesondere durch Herstellen der Gelenkverbindung, zu vereinfachen. Hier-bei soll der erforderliche Kraftaufwand reduziert werden und das Risiko einer Deformierung oder eines Bruchs vermieden werden.

Diese Aufgabe wird schon in der Druckschrift US 6,247,868 B1 durch eine Gelenkverbindung gelöst, wobei ein Gelenkkopf drei voneinander durch Ausnehmungen getrennte Erhöhungen aufweist, die um zumindest einen Ringumfang des Gelenkkopfes angeordnet sind und Außenflächen in Form von konzentrischen Kugelringsektoren tragen; bei der Lagerschale, die einen Innenraum zur Aufnahme des Gelenkkopfes und eine zum Innenraum führende Öffnung aufweist, ist der Innenraum durch eine Anzahl von Innenführungen umgeben, wobei die Innenführungen mit den Außenflächen des Gelenkkopfes zusammenwirken, um so eine kugelgelenkartige Verbindung zu erreichen; zwischen den Innenführungen der Lagerschale befinden sich im zur der Öffnung hin orientierten Bereich Aussparungen, durch die - während des Einführens des Gelenkkopfes in die Lagerschale - die Erhöhungen des Gelenkkopfes hindurch bewegbar sind.

Die vorliegende Erfindung löst die gestellte Aufgabe durch eine Gelenkverbindung mit den Merkmalen von Anspruch 1, wodurch zusätzlich die Sicherung der Gelenkverbindung gegen ein Herausziehen gesteigert wird. Dadurch, dass beim Einsetzen des Gelenkkopfes in die Lagerschale die Teilflächen der Kranzringe durch Ausnehmungen geschoben werden können, ergibt sich ein kraftloses Montieren, d.h. Herstellen der Gelenkverbindung. Außerdem ermöglicht die erfindungsgemäße Gestaltung der Gelenkverbindung eine Erhöhung der kugelförmigen Kontaktfläche gegenüber herkömmlichen Einpress-Kugelgelenken. Während des Einführens wird der Gelenkkopf soweit um seine Achse gedreht, dass die Erhöhungen durch die Aussparungen geführt werden können, und dann in der eingesetzten Position wiederum gedreht, so dass die Erhöhungen sich an den Innenführungen abstützen, sodass ein unabsichtliches Herausziehen des Gelenkkopfes nicht mehr stattfinden kann.

Bei der Erfindung sind die Erhöhungen und Innenführungen in zwei oder mehr Ringen, die zueinander in Axialrichtung versetzt angeordnet sind, organisiert, um die Stabilität des Kugelgelenks zu erhöhen und eine weiter gesteigerte Sicherung der Gelenkverbindung gegen ein Herausziehen zu erreichen. Dies bedeutet, dass der Gelenkkopf zumindest zwei Kranzringe aufweist, die entlang einer Achsrichtung des Gelenkkopfes zueinander versetzt sind und die jeweils zumindest zwei, bevorzugt drei oder mehr, voneinander durch Ausnehmungen getrennte Erhöhungen mit Außenflächen in Form von konzentrischen Kugelringsektoren aufweisen, und in der Lagerschale die Innenführungen in zumindest zwei (in der Achsrichtung aufeinanderfolgenden) Ringbereichen angeordnet sind, die jeweils den Kranzringen des Gelenkkopfes entsprechen, wobei die Innenführungen mit den Außenflächen des Gelenkkopfes zusammenwirken, wobei sich zwischen den Innenführungen zumindest des zur Öffnung näher gelegenen Ringes Aussparungen befinden, durch die die Erhöhungen der Kranzringe des Gelenkkopfes hindurch bewegbar sind.

Insbesondere können an dem Gelenkkopf genau zwei Kranzringe ausgebildet sein, nämlich in Achsrichtung gesehen ein vorderer und ein hinterer Kranzring. Die Zahl der Ringbereiche in der Lagerschale kann dann entsprechend ebenfalls zwei sein.

Vorteilhafter Weise können die Erhöhungen von je zwei aufeinander folgenden Kranzringen des Gelenkkopfs entlang der Achsrichtung gesehen zueinander auf Lücke angeordnet sein. Die erreicht eine bessere Verteilung der Kräfte im Gelenk und erhöht zudem die Sicherung der Gelenkverbindung.

An dem Gelenkkopf kann eine umlaufende Rinne zwischen aufeinanderfolgenden Kranzringen ausgebildet sein, um eine höhere Positionierfreiheit während des Montagevorgangs der Gelenkverbindung zu ergeben.

Um eine vereinfachte Herstellung der Komponenten und eine erleichtertes Einsetzen des Gelenkkopfes zu bieten, ist es vorteilhaft, wenn die Aussparungen der Lagerschale die Form von Sektoren der Innenfläche eines Kreishohlzylinders haben.

Um einen verbesserten Kontakt zwischen den korrespondierenden Flächen zu erhalten, können die Innenführungen zumindest eines Ringbereichs in der Lagerschale Innenflächen mit konzentrischer hohlkugelartiger Wölbung aufweisen.

Um die Bewegung des Gelenkkopfes während des Einsetzens in die Lagerschale und/oder im eingesetzten Zustand und begrenzen, kann an einem Ende einer der Innenführungen ein Anschlagelement ausgebildet sein, das von diesem Ende bevorzugt senkrecht zu einer Umfangsrichtung vorspringt, z.B. als Rippe, die in im Wesentlichen axialer Richtung verläuft.

Die erfindungsgemäße Gelenkverbindung eignet sich, wie bereits angedeutet, besonders für Scheinwerfer mit einer in einer verstellbaren Halterung gehaltenen optischen Komponente.

Die Erfindung samt weiteren Einzelheiten und Vorzügen wird nachfolgend anhand eines nicht einschränkenden Ausführungsbeispiels der Erfindung näher erläutert, das in den beigefügten Zeichnungen dargestellt ist. Die Zeichnungen zeigen:
- Fig. 1: eine Halterung mit einer Gelenkverbindung gemäß dem Ausführungsbeispiel der Erfindung;
- Fig. 2: eine vergrößerte Ansicht der Gelenkverbindung der Fig. 1;
- Fig. 3 und 4: das Gleitelement, das den Gelenkkopf der Gelenkverbindung der Fig. 2 bildet, in einer Rückansicht bzw. einer Schnittansicht;
- Fig. 5 und 6: die Lagerschale der Gelenkverbindung der Fig. 2 in einer Vorderansicht bzw. einer Schnittansicht, wobei die Sichtrichtungen jeweils denen der Fig. 3 und 4 entsprechen;
- Fig. 7 und 8: die Lagerschale mit eingesetztem Gleitelement in einer Vorderansicht bzw. einer Schnittansicht, wobei die Sichtrichtungen jeweils denen der Fig. 3 und 4 entsprechen;
- Fig. 9A bis 9E: illustrieren die einzelnen Schritte des Herstellens der Gelenkverbindung; und
- Fig. 10: eine vergrößerte Ansicht in Perspektive der Lagerschale in einer Variante, die eine Rippe als Anschlagselement für den Gelenkkopf aufweist.

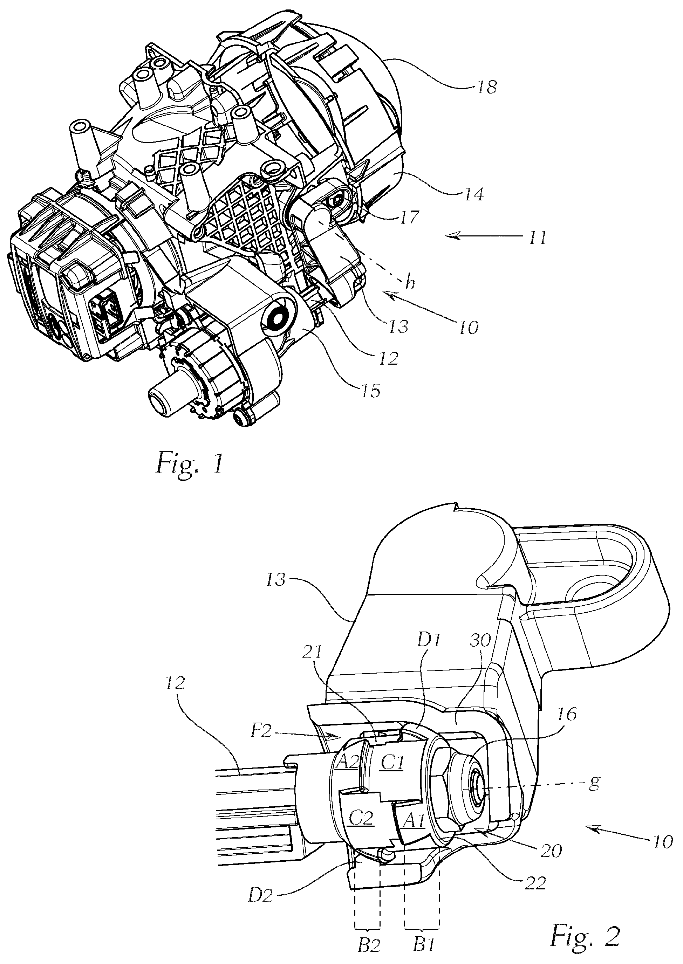

In Fig. 1 ist eine Anwendung einer erfindungsgemäße Gelenkverbindung 10 gemäß dem nicht einschränkenden Ausführungsbeispiel in einem Scheinwerfer gezeigt, nämlich in einem beispielhaften Aufbau einer Linsenhalterung 11 einer Scheinwerferlinse 18. Die Linse 18 ist hier die optische Komponente im Sinne des Hauptanspruchs; selbstverständlich könnte anstelle der Linse 18 eine andere optische Komponente in einer Halterung gehalten sein. Die Linse 18 ist in einem Rahmenteil 14 montiert, dessen Ausrichtung verstellbar ist, beispielsweise um eine Schwenkachse h innerhalb eines Winkelbereiches (der z.B. einige wenige Grad ausmacht) verschwenkbar. Das Einstellen des Schwenkwinkels erfolgt über einen Stellhebel 13, der mit dem Stellteil 12 eines Stellantriebs 15 verbunden und von letzteren angesteuert wird. Die Gelenkverbindung 10 leistet hier die gelenkige Verbindung zwischen dem Stellhebel 13 und dem Stellteil 12. Selbstverständlich kann in anderen Ausführungsformen der Erfindung die Gelenkverbindung zwischen zwei anderen Komponenten der Linsenhalterung 11 - oder allgemein einer Halterung einer optischen Komponente - angeordnet sein, die miteinander über ein Gelenk zu verbinden sind. In der gezeigten Ausführungsform ist der Stellhebel 13 mit dem Rahmenteil 14 fest verbunden, beispielsweise über eine Schraubverbindung 17, kann mit diesem jedoch auch einstückig sein; in anderen (nicht gezeigten) Ausführungsformen könnte die erfindungsgemäße Gelenkverbindung auch zwischen Stellhebel und Rahmenteil vorgesehen sein.

Fig. 2 zeigt in einer vergrößerten Detailansicht die Gelenkverbindung 10, die teilweise eröffnet dargestellt ist. Die beiden am Gelenk beteiligten Gelenkteile, hier Stellteil 12 und Stellhebel 13, sind ebenfalls in der Fig. 2 zumindest teilweise erkennbar. Ein Gelenkkopf 20 ist am Ende des einen Gelenkteils ausgebildet, nämlich hier des Stellteils 12, während das Ende des anderen Gelenkteils, nämlich des Stellhebels 13, eine Gelenkschale oder Lagerschale 30 aufweist. Die Lagerschale 30 ist im Schnitt längs einer Schnittebene, die durch die Achse g des Gelenkkopfes 20 verläuft, gezeigt.

In einer Variante könnte die Anordnung auch umgekehrt sein, sodass der Stellhebel den Kugelkopf trägt, der in einer Lagerschale an dem Stellteil steckt. Die Gelenkkomponenten 20, 30 befinden sich vorzugsweise, aber nicht notwendigerweise an den Endbereichen der Gelenkteile 12, 13. Auch muss die Achse g des Gelenkkopfes im Allgemeinen nicht mit der Achse des Gelenkteils (insbesondere Stellteils) zusammenfallen, das den Gelenkkopf trägt.

Der Gelenkkopf 20 wird von einem hier als Gleitelement 21 bezeichneten Bauteil gebildet; das Gleitelement 21 ist auf das Ende des Stellteils 12 gesteckt und mithilfe einer Schraube 16 gesichert. Das Gleitelement hat typischerweise eine Größe von mehreren Millimetern, z.B. einen Durchmesser (gemessen senkrecht zur Achse g) von knapp 20 mm.

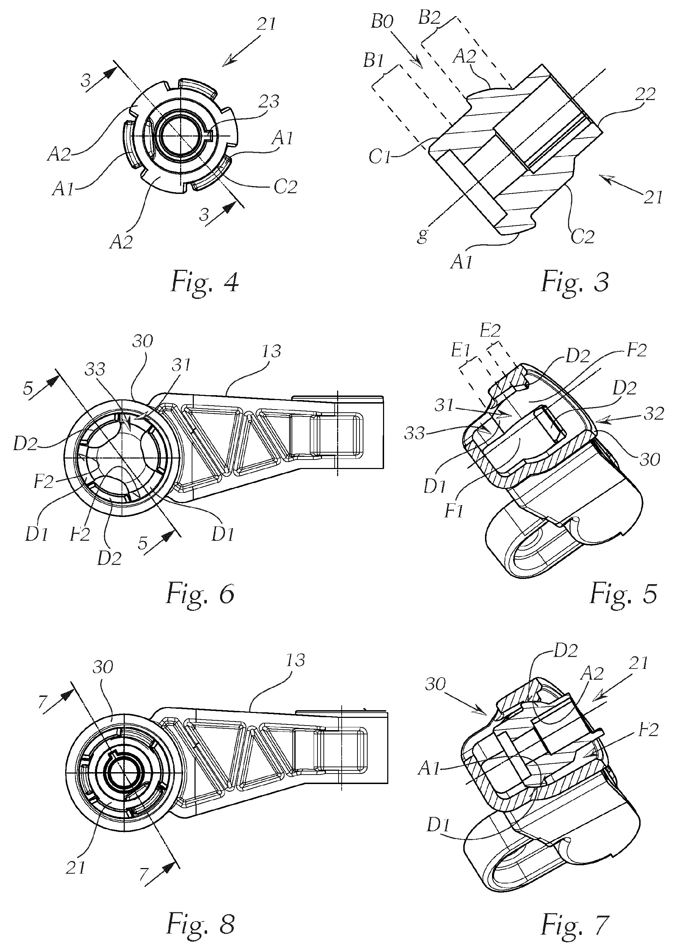

Bezugnehmend auf Fig. 2 und 3 weist das Gleitelement 21 einen im Wesentlichen zylindrischen Körper 22 auf, auf dem eine Anzahl von Vorsprüngen oder Erhöhungen A1, A2 ausgebildet sind, die in zwei Kranzringen B1, B2 angeordnet sind, hier auch kurz nur als Ringe bezeichnet. Die Vorsprünge A1, A2 in jedem Ring B1 bzw. B2 sind vorzugsweise jeweils in der gleichen Axialebene angeordnet und weisen vorzugsweise keine (schraubenartige) Steigung auf, bilden somit Sektoren eines Ringbereiches (Kugelzone). Die Kranzringe B1, B2 sind voneinander entlang der Axialrichtung beabstandet. Außerdem sind die Vorsprünge A1, A2 der verschiedenen Ringe B1, B2 in der Drehrichtung um die Achse g zueinander versetzt, sodass die Vorsprünge eines Kranzringes B1 (oder B2) mit dem Zwischenraum zwischen zwei Vorsprüngen des anderen Kranzringes B2 (oder B1) korrespondieren. Die nach außen gewandten Flächen der Vorsprünge A1, A2 entsprechen Kugelringsektoren einer Kugelfläche. Die Außenflächen der Vorsprünge A1, A2 sind somit konzentrische Kugelringsektoren, vorzugsweise mit demselben Radius (Abstand vom Zentrum der gedachten Kugel).

Fig. 3 zeigt das Gleitelement 21 in einer Schnittansicht, wobei die Schnittebene in Fig. 4 anhand der Linie 3-3 verdeutlicht ist. Entsprechend dem axialen Versatz der Kranzringe B1 und B2 zueinander ist zwischen diesen eine Lücke in Form einer umlaufenden Rinne B0 gebildet.

Fig. 4 zeigt das Gleitelement 21 in einer Rückansicht, nämlich längs der Achse g mit Sicht auf die dem Stellteil 12 zugewandte (rückwärtigen) Seite. Die Vorsprünge A1, A2 sind deutlich erkennbar, ebenso wie deren zueinander versetzte Anordnung in hintereinander angeordneten (d.h. in Axialrichtung versetzten) Kranzringen B1, B2. Die Winkelausdehnung ("Winkelbreite", d.h. die als Winkel gemessene Ausdehnung entlang einer Umfangsrichtung) der Vorsprünge A1, A2 ist vorzugsweise etwas geringer als 180°/n, um eine bessere Beweglichkeit während der Montage zu gestatten (siehe weiter unten). Die Winkelbreite eines Vorsprünge A1, A2 kann unterschiedlich gewählt werden; auf diese Weise ist über die Winkelbreite eine Kodierung möglich, die die Montage der Gelenkverbindung nur in der korrekten Orientierung des Stellhebels zulässt. Zusätzlich kann die Kodierung auch dahin gehende verwendet werden, dass sie eine Unterscheidung für verschiedene Baugruppen des Scheinwerfers gestattet.

Zwischen den Vorsprüngen A1 des Ringes B1 bestehen somit Vertiefungen in radialer Richtung oder Ausnehmungen C1; analog befinden sich Vertiefungen/Ausnehmungen C2 zwischen den Vorsprüngen A2 des Ringes B2. Vorzugsweise sind die Vorsprünge A1, A2 innerhalb eines Ringes B1, B2 gleichmäßig angeordnet, somit um 360°/n versetzt, wenn n die Zahl der Vorsprünge ist. Beispielsweise sind, wie in Fig. 4 gezeigt, drei Vorsprünge je Kranzring vorgesehen, und die Vorsprünge sind innerhalb eines Ringes um 120° versetzt, während die Vorsprünge benachbarter Ringe um 60° versetzt sind.

Auch ist eine Nut 23 im Inneren des Halsansatzes des Gleitelements erkennbar, die mit einem korrespondierenden Steg auf dem Stellteil 12 zusammenwirkt und eine Drehung des Gleitelements auf dem Stellteil unterbindet.

In den Fig. 5 und 6 ist die Lagerschale 30 gezeigt, wobei Fig. 5 eine Schnittansicht und Fig. 6 eine Vorderansicht ist; die Schnittebene der Fig. 5 ist durch die Linie 5-5 in Fig. 6 angezeigt (die Orientierungen der Ansicht entsprechen denen der Fig. 3 und 4).

Die Lagerschale 30 hat die Grundform eines Bechers mit durchbrochener Wandung, die einen Innenraum 31 umgibt, der dazu vorgesehen ist, den Gelenkkopf 20 aufzunehmen. Der Innenraum 31 hat nach außen in der Richtung, die der Achse g entspricht, eine Öffnung 32, durch die der Gelenkkopf wie weiter unten eingehend beschrieben in den Innenraum 31 eingeführt wird; bei eingesetztem Gelenkkopf verläuft das den Gelenkkopf (genauer das Gleitelement) tragende Ende des Stellteils 12 durch die Öffnung der Lagerschale. Der Innenraum 31 wird durch eine Anzahl von nach innen gewandten Innenführungen D1, D2 definiert, die als konkav gekrümmten Flächen und/oder Vorsprünge ausgeführt sind. Im gezeigten Ausführungsbeispiel sind die Innenführungen D1, D2 in Ringen (Ringbereichen) E1, E2 angeordnet, die zonenweise längs der Achsrichtung zueinander versetzt sind - in den Ringen B1, B2 des Gleitelements 21 entsprechender Weise.

Die Flächen D1 entsprechen Kugelringsektoren einer Hohlkugelfläche, die jeweils mit einer Fläche eines der Vorsprünge A1 des Gleitelements 21 korrespondieren. Die konkaven Flächen D1 bilden somit konzentrische (Hohl)Kugelringsektoren, vorzugsweise mit einheitlichem Radius. Die Vorsprünge D2 des der Öffnung 32 zugewandten Ringbereichs E2 beinhalten nach innen vorspringende Leisten, die die in gleichbleibender axialer Höhe um einen bestimmten Winkelbereich in Bezug auf die Achse g verlaufen und an denen jeweils die Fläche eines entsprechenden Vorsprungs A2 des Gleitelements 21 gleiten kann. Die Vorsprünge D2 bilden somit konzentrische (Hohl)Ringsektoren, vorzugsweise mit einheitlichem Radius. Die Flächen/Vorsprünge D1, D2 bilden auf diese Weise Innenführungen, um die Außenflächen des Gleitelements gleitend zu führen. Zwischen den Innenführungen D1, D2 befinden sich Aussparungen (Freiflächen) F1, F2, d.h. von der Achse bzw. dem Mittelpunkt ausgehende Ausweitungen des Innenraums 31; die Aussparungen F1 des Ringbereichs E1 sind als die Wandung durchbrechende Fenster ausgeführt, was Materialaufwand einspart. In Fig. 6 ist der äußere Rand der Leisten D2 erkennbar, während die zu dem Innenraum 31 gewandten Teile der Leisten D2 nicht sichtbar sind (vgl. auch Fig. 5).

Der Innenraum 31 kann außerdem, wie in Fig. 5 ersichtlich, gegenüber der Öffnung 32 eine Ausweitung oder Ausbuchtung 33 aufweisen, um der Spitze des durch das Gleitelement 21 ragenden Stellteils (allgemein: Gelenkteils) 12 freien Raum zu geben und die Beweglichkeit desselben zu sichern. Anstelle der Ausbuchtung 33 könnte in einer Variante auch eine zweite Öffnung vorgesehen sein, sodass die Grundform des Innenraums nicht becherartig ist, sondern eher einem Ring oder (eventuell durchbrochenem) Rohrstück entspricht.

Fig. 7 und 8 zeigen die Lagerschale 30 mit eingesetztem Gleitelement 21, wodurch die erfindungsgemäße Gelenkverbindung 10 entsteht. Hierbei ist Fig. 7 eine Schnittansicht und Fig. 8 eine Aufsicht, wobei in Fig. 8 die Schnittebene der Fig. 7 durch die Linie 7-7 angezeigt ist (die Orientierungen der Ansicht entsprechen denen der Fig. 3 und 4). Wie besonders in Fig. 7 erkennbar ist, liegen die Flächen der Vorsprünge A1, A2 and den korrespondierenden Innenführungen D1, D2 der Lagerschale 30 an und können aneinander gleiten, wodurch sich die Funktion eines Kugelkopfgelenks ergibt. Die Flächen der Vorsprünge A1 und die diesen entsprechenden Innenführungen D1 bilden somit zusammenwirkende Gegenflächen; ebenso bilden die Innenführungen D2 Gegenkomponenten der Flächen der Vorsprünge A2.

Aufgrund der so hergestellten Gelenkverbindung kann der Stellhebel 13 um die Achse g beliebig gedreht werden; zusätzlich ist die Achse in geringerem Ausmaß (für die Halterung im Scheinwerfer ist ein Winkel von einige Grad ausreichend) um den Mittelpunkt des Gelenkkopfes verschwenkbar, und zwar um beide Achsen senkrecht zur Achse g. Bei der Montage der Halterung wird der Stellhebel an seinem anderen Ende über die erwähnte Schraubverbindung 17 (Fig. 1) fixiert, was seine Bewegungsfreiheit beschränkt, besonders die Freiheit der Drehung um die Achse g. Auf diese Weise ist ausgeschlossen, dass im montierten Zustand die Gelenkverbindung gelöst wird, denn dazu müsste der Stellhebel in stärkerem Ausmaß gedreht werden, als es die Schraubverbindung 17 zulässt.

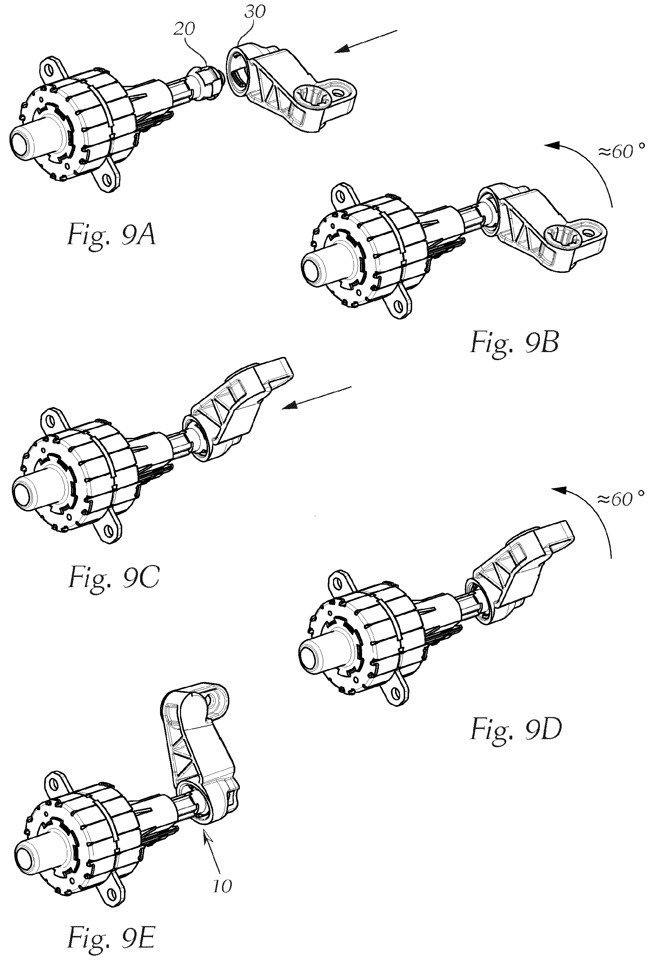

Fig. 9A bis 9E illustrieren den Montagevorgang der Halterung, wobei die erfindungsgemäße Gelenkverbindung hergestellt wird. Der Gelenkkopf 20 kann nur dann in die Lagerschale 30 eingesetzt werden, wenn die Vorsprünge/Erhöhungen mit den Ausnehmungen in der Lagerschale korrespondieren. In einem ersten Schritt wird der Gelenkkopf 20 zur Öffnung der Lagerschale 30 gebracht und so ausgerichtet, dass die vorderen Vorsprünge A1 des Gelenkkopfes auf die Aussparungen F1 der Lagerschale 30 ausgerichtet sind. Bei einer Bewegung des Gelenkkopfes entlang der Achse g passen somit die Vorsprünge A1 in die Aussparungen F1. Dies ist in Fig. 9A gezeigt. In einem zweiten Schritt kann somit der Gelenkkopf 20 in die Lagerschale 30 hinein - Verschiebung entlang der Achse g - bewegt werden, bis die Vorsprünge A2 an den äußeren Randflächen der Flächen D2 anstehen, vgl. Fig. 9B. Als nächster Schritt wird der Gelenkkopf um etwa 60° um die Achse g gedreht, sodass die Position der Fig. 9C erreicht wird. Dadurch liegen die Vorsprünge A2 nicht mehr auf den Rändern der Flächen D2 auf. In einem weiteren Schritt wird der Gelenkkopf 20 wieder entlang der Achse g bewegt, bis die Flächen der vorderen Vorsprünge A1 auf der Höhe der zugeordneten Gegenflächen D1 liegen, vgl. Fig. 9D. Dann wird in einem anschließenden Schritt der Gelenkkopf um weitere 60° gedreht. Der Gelenkkopf befindet sich nunmehr - wie in Fig. 9E gezeigt - in seiner montierten Lage, in der die Gelenkverbindung 10 hergestellt ist und nicht durch einfachen Zug gelöst werden kann. Vielmehr kann die Gelenkverbindung nur gelöst werden, wenn der Gelenkkopf zurück um 60° gedreht wird, was wie bereits erwähnt im vollständig montierten Zustand der Halterung nicht möglich ist. Auf diese Weise wird die Gelenkverbindung effektiv verriegelt.

Die an der erfindungsgemäßen Gelenkverbindung beteiligten Komponenten bestehen (mit Ausnahme der Schraube 16) vorzugsweise aus einem Kunststoffmaterial, das verschleißarmen Betrieb der Gelenkverbindung gestattet. Geeignete Materialien sind dem Fachmann wohlbekannt.

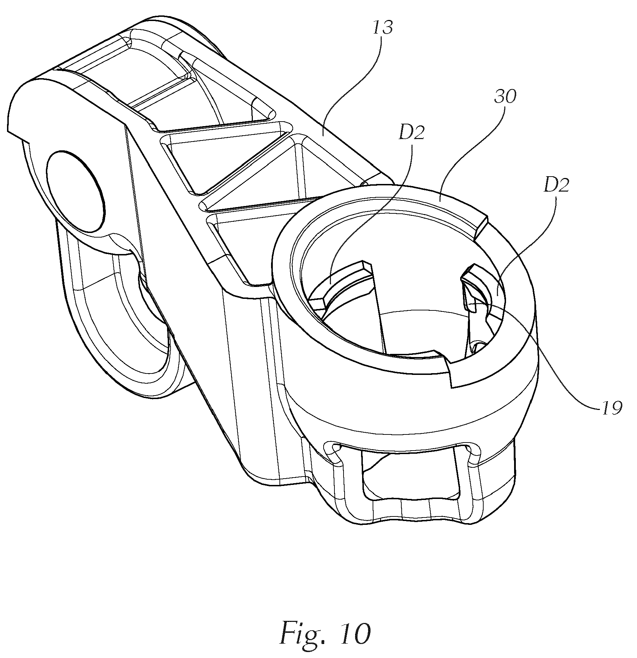

Bezugnehmend auf Fig. 10, die eine vergrößerte Schrägansicht der Lagerschale 30 mit Sicht auf als Innenführung dienende Vorsprünge D2 zeigt, ist eine Weiterbildung des Ausführungsbeispiels illustriert. An einem Ende eines (oder mehrerer) der Vorsprünge D2 ist zusätzlich ein Anschlag 19 ausgebildet. Dieser Anschlag 19 kann beispielsweise als senkrecht zum Vorsprung, somit in axialer Richtung, verlaufende Rippe ausgebildet sein. Der Anschlag 19 begrenzt die Drehung des Gelenkkopfes 20 beim Einsetzen, insbesondere bei der ersten Drehung um ca. 60°, und kann so sichergestellen, dass die korrekte Zwischenposition wie in Fig. 9C gezeigt bei der Montage erreicht wird. In anderen (nicht gezeigten) Ausgestaltungen könnte auch, sofern in Zusammenhang mit der gewünschten Beweglichkeit der Gelenkverbindung erforderlich, ein Anschlag vorgesehen sein, z.B. am Ende einer Innenfläche D1, der die Bewegung des Kugelkopfes im eingesetzten Zustand begrenzt.

Die Anzahl der Kranzringe bzw. der Innenringe in der Lagerschale kann verschieden sein. So kann z.B. in einer (nicht gezeigten) vereinfachten Ausführung der Gelenkkopf einen Kranzring mit Erhöhungen aufweisen, die über den Äquator des Gelenkkopfes reichen; entsprechend dazu würde die Lagerschale einen Satz von konkaven Flächen aufweisen, zwischen denen Aussparungen zum Einsetzen des Gelenkkopfes mit einem Kranzring vorgesehen sind.

In einer anderen Variante kann die relative Lage der beiden Kranzringe des Gelenkkopfes von der des oben gezeigten Ausführungsbeispiels abweichen. Beispielsweise könnte der Ring B1 um 60° um die Achse versetzt werden, sodass die Erhöhungen A1 und A2 übereinander (entlang der Achse g gesehen) liegen würden. Dem entsprechend würden dann die Innenführungen D1 und D2 der Lagerschale übereinander angeordnet. In dieser Variante kann der Gelenkkopf mit einer Längsbewegung in den Innenraum der Lagerschale eingeführt und sodann mit einer Verdrehung um die Achse g fixiert werden. Diese Variante bietet eine geringere Sicherung der Gelenkverbindung gegen ein Herausfallen und ist im Allgemeinen mit einer geringeren Bewegungsfreiheit verbunden, hätte jedoch einen einfacheren Ablauf der Montage.

## Patentansprüche

1. Gelenkverbindung (10) zur Verwendung in einer verstellbaren Halterung (11) für eine optische Komponente (18) eines Scheinwerfers, aufweisend einen Gelenkkopf (20) und eine Lagerschale (30), wobei der Gelenkkopf (20) in der Lagerschale (30) in drehbar gelagerter Weise beweglich ist,
wobei der Gelenkkopf (20) zumindest zwei, bevorzugt drei oder mehr, Erhöhungen (A1, A2) aufweist, die Außenflächen in Form von konzentrischen Kugelringsektoren tragen, und die Lagerschale (30) einen Innenraum (31) zur Aufnahme des Gelenkkopfes (20) und eine zum Innenraum führende Öffnung (32) aufweist, wobei der Innenraum (31) durch eine Anzahl von Innenführungen (D1, D2) umgeben ist, wobei die Innenführungen (D1, D2) mit den Außenflächen des Gelenkkopfes (20) zusammenwirken,
wobei sich zwischen den Innenführungen (D2) der Lagerschale (30) zumindest im zur Öffnung (32) hin orientierten Bereich Aussparungen (F2) befinden, durch die die Erhöhungen (A1, A2) des Gelenkkopfes hindurch bewegbar sind,
wobei die Erhöhungen (A1, A2) voneinander durch Ausnehmungen (C1, C2) getrennt sind und um zumindest einen Ringumfang (B1, B2) des Gelenkkopfes angeordnet sind,
**dadurch gekennzeichnet, dass** die Erhöhungen (A1, A2) und Innenführungen (D1, D2) in zwei oder mehr Kranzringen (B1, B2; E1, E2), die zueinander in Axialrichtung, entlang der Achsrichtung des Gelenkkopfs, versetzt angeordnet sind, organisiert sind.

2. Gelenkverbindung nach Anspruch 1, **dadurch gekennzeichnet, dass** der Gelenkkopf (20) zumindest zwei Kranzringe (B1, B2) aufweist, die entlang einer Achsrichtung (g) des Gelenkkopfes zueinander versetzt sind und die jeweils zumindest zwei, bevorzugt drei oder mehr, von einander durch Ausnehmungen (C1, C2) getrennte Erhöhungen (A1, A2) mit Außenflächen in Form von konzentrischen Kugelringsektoren aufweisen, und in der Lagerschale (30) die Innenführungen (D1, D2) in zumindest zwei Ringbereichen (E1, E2) angeordnet sind, die jeweils den Kranzringen (B1, B2) des Gelenkkopfes (20) entsprechen, wobei die Innenführungen (D1, D2) mit den Außenflächen des Gelenkkopfes (20) zusammenwirken,
wobei sich zwischen den Innenführungen (D2) zumindest des zur Öffnung (32) näher gelegenen Ringes (B2) Aussparungen (F2) befinden, durch die die Erhöhungen (A1, A2) der Kranzringe (B1, B2) des Gelenkkopfes hindurch bewegbar sind.

3. Gelenkverbindung nach einem der vorhergehenden Ansprüche, **dadurch gekennzeichnet, dass** die Erhöhungen (A1, A2) von je zwei aufeinander folgenden Kranzringen (B1, B2) des Gelenkkopfs (20) entlang der Achsrichtung (g) gesehen zueinander auf Lücke angeordnet sind.

4. Gelenkverbindung nach einem der vorhergehenden Ansprüche, **dadurch gekennzeichnet, dass** an dem Gelenkkopf eine umlaufende Rinne (B0) zwischen aufeinanderfolgenden Kranzringen (B1, B2) ausgebildet ist.

5. Gelenkverbindung nach einem der vorhergehenden Ansprüche, **dadurch gekennzeichnet, dass** an dem Gelenkkopf (20) genau zwei Kranzringe der Erhöhungen ausgebildet sind, nämlich in Achsrichtung (g) gesehen ein vorderer (B1) und ein hinterer (B2) Kranzring.

6. Gelenkverbindung nach einem der vorhergehenden Ansprüche, **dadurch gekennzeichnet, dass** in der Lagerschale (30) die Innenführungen (D1) zumindest eines Ringbereichs (E1) Innenflächen mit konzentrischer hohlkugelartiger Wölbung aufweisen.

7. Gelenkverbindung nach einem der vorhergehenden Ansprüche, **gekennzeichnet durch** ein Anschlagelement (19), das an einem Ende einer der Innenführungen (D2) ausgebildet ist und von dem genannten Ende senkrecht zu einer Umtangsrichtung vorspringt.

8. Gelenkverbindung nach einem der vorhergehenden Ansprüche, **dadurch gekennzeichnet, dass** die Aussparungen (F1, F2) der Lagerschale (30) die Form von Sektoren der Innenfläche eines Kreishohlzylinders haben.

9. Verstellbare Halterung (11) mit einer Gelenkverbindung (10) nach einem der vorhergehenden Ansprüche, wobei in der verstellbaren Halterung (11) eine optische Linse oder ein Reflektor eines Scheinwerfers gehalten ist.

10. Scheinwerfer mit einer in einer verstellbaren Halterung (11) gehaltenen optischen Komponente (18), **dadurch gekennzeichnet, dass** die Halterung (11) eine Gelenkverbindung (10) nach einem der Ansprüche 1 bis 8 beinhaltet und/oder eine Halterung nach Anspruch 9 ist.

## Claims

1. An articulated joint (10) for use in an adjustable mount (11) for an optical component (18) of a headlight, having a swivel head (20) and a bearing cup (30), the swivel head (20) being movable in the bearing cup (30) in a rotatably mounted manner,
wherein the swivel head (20) has at least two, preferably three or more, raised portions (A1, A2), which carry outer surfaces in the form of concentric spherical ring sectors, and the bearing cup (30) has an interior (31) for accommodating the swivel head (20) and has an opening (32) leading to the interior, the interior (31) being surrounded by a number of inner guides (D1, D2), the inner guides (D1, D2) cooperating with the outer surfaces of the swivel head (20),
wherein recesses (F2) are located between the inner guides (D2) of the bearing cup (30) at least in the region oriented towards the opening (32), through which recesses the raised portions (A1, A2) of the swivel head can be moved, wherein the raised portions (A1, A2) are separated from one another by recesses (C1, C2) and are arranged around at least one annular periphery (B1, B2) of the swivel head,
**characterised in that**
the raised portions (A1, A2) and inner guides (D1, D2) are organised in two or more coronal rings (B1, B2; E1, E2) arranged offset relative to one another in the axial direction, along the axis direction of the swivel head.

2. The articulated joint according to Claim 1, **characterised in that** the swivel head (20) has at least two coronal rings (B1, B2), which are offset relative to one another along an axis direction (g) of the swivel head and which each have at least two, preferably three or more, raised portions (A1, A2) separated from one another by recesses (C1, C2), said raised portions having outer surfaces in the form of concentric spherical ring sectors, and the inner guides (D1, D2) are arranged in the bearing cup (30) in at least two annular regions (E1, E2), which each correspond to the coronal rings (B1, B2) of the swivel head (20), wherein the inner guides (D1, D2) cooperate with the outer surfaces of the swivel head (20),
wherein recesses (F2) are located between the inner guides (D2) of at least the ring (B2) disposed closer to the opening (32), the raised portions (A1, A2) of the coronal rings (B1, B2) of the swivel head being movable through said recesses.

3. The articulated joint according to one of the preceding claims, **characterised in that** the raised portions (A1, A2) of each two successive coronal rings (B1, B2) of the swivel head (20) are arranged at gaps from one another as considered along the axis direction (g).

4. The articulated joint according to one of the preceding claims, **characterised in that** a peripheral groove (B0) is formed on the swivel head, between successive coronal rings (B1, B2).

5. The articulated joint according to one of the preceding claims, **characterised in that** exactly two coronal rings of the raised portions are formed on the swivel head (20), specifically a front (B1) and a rear (B2) coronal ring as considered in the axis direction (g).

6. The articulated joint according to one of the preceding claims, **characterised in that**, in the bearing cup (30), the inner guides (D1) of at least one ring region (E1) have inner surfaces having a concentric hollow-spherical-like curvature.

7. The articulated joint according to one of the preceding claims, **characterised by** a stop element (19), which is formed at an end of one of the inner guides (D2) and protrudes from the aforementioned end perpendicularly to a peripheral direction.

8. The articulated joint according to one of the preceding claims, **characterised in that** the recesses (F1, F2) of the bearing cup (30) have the shape of sectors of the inner surface of a circular hollow cylinder.

9. An adjustable mount (11) having an articulated joint (10) according to one of the preceding claims, wherein an optical lens or a reflector of a headlight is held in the adjustable mount (11).

10. A headlight having an optical component (18) held in an adjustable mount (11), **characterised in that** the mount (11) includes an articulated joint (10) according to one of Claims 1 to 8 and/or is a mount according to Claim 9.

## Revendications

1. Liaison articulée (10) destinée à être utilisée dans un support réglable (11) pour un composant optique (18) d'un phare, comprenant une tête d'articulation (20) et une coquille de palier (30), la tête d'articulation (20) étant mobile d'une manière montée à rotation dans la coquille de palier (30), la tête d'articulation (20) comprenant au moins deux, de préférence au moins trois, saillies (A1, A2), lesquelles portent des surfaces externes sous forme de secteurs annulaires sphériques concentriques, et la coquille de palier (30) comprenant un espace interne (31) destiné à recevoir la tête d'articulation (20) et une ouverture (32) menant à l'espace interne, l'espace interne (31) étant entouré par une pluralité de guides internes (D1, D2), les guides internes (D1, D2) coopérant avec les surfaces externes de la tête d'articulation (20), des évidements (F2) se trouvant au moins dans la zone orientée vers l'ouverture (32), entre les guides internes (D2) de la coquille de palier (30), évidements à travers lesquels les saillies (A1, A2) de la tête d'articulation sont aptes à être déplacées, les saillies (A1, A2) étant séparées les unes des autres par des cavités (C1, C2) et étant disposées autour d'au moins une circonférence annulaire (B1, B2) de la tête d'articulation, **caractérisée par le fait que** les saillies (A1, A2) et les guides internes (D1, D2) sont organisés en au moins deux anneaux de couronne (B1, B2 ; E1, E2), lesquels sont disposés décalés les uns par rapport aux autres dans la direction axiale, le long de la direction axiale de la tête d'articulation.

2. Liaison articulée selon la revendication 1, **caractérisée par le fait que** la tête d'articulation (20) comprend au moins deux anneaux de couronne (B1, B2), lesquels sont décalés les uns par rapport aux autres le long d'une direction axiale (g) de la tête d'articulation et lesquels comprennent chacun au moins deux, de préférence au moins trois, saillies (A1, A2) séparées les unes des autres par des cavités (C1, C2), ayant des surfaces externes sous forme de secteurs annulaires sphériques concentriques, et les guides internes (D1, D2) sont disposés dans la coquille de palier (30) dans au moins deux zones annulaires (E1, E2), lesquelles correspondent chacune aux anneaux de couronne (B1, B2) de la tête d'articulation (20), les guides internes (D1, D2) coopérant avec les surfaces externes de la tête d'articulation (20), des évidements (F2) se trouvant entre les guides internes (D1) au moins de l'anneau (B2) situé le plus près de l'ouverture (32), évidements à travers lesquels les saillies (A1, A2) des anneaux de couronne (B1, B2) de la tête d'articulation sont aptes à être déplacées.

3. Liaison articulée selon l'une des revendications précédentes, **caractérisée par le fait que** les saillies (A1, A2) de chaque deux anneaux de couronne (B1, B2) successifs de la tête d'articulation (20) sont disposées en chicane, vues le long de la direction axiale (g).

4. Liaison articulée selon l'une des revendications précédentes, **caractérisée par le fait qu'**une rainure circonférentielle (B0) est formée sur la tête d'articulation, entre des anneaux de couronne (B1, B2) successifs.

5. Liaison articulée selon l'une des revendications précédentes, **caractérisée par le fait qu'**exactement deux anneaux de couronne des saillies sont formés sur la tête d'articulation (20), à savoir un anneau de couronne avant (B1) et un anneau de couronne arrière (B2), vus dans la direction axiale (g).

6. Liaison articulée selon l'une des revendications précédentes, **caractérisée par le fait que**, dans la coquille de palier (30), les guides internes (D1) d'au moins une zone annulaire (E1) comprennent des surfaces internes ayant un bombement en forme de sphère creuse, concentrique.

7. Liaison articulée selon l'une des revendications précédentes, **caractérisée par** un élément de butée (19), lequel est formé sur une extrémité de l'un des guides internes (D2) et fait saillie à partir de ladite extrémité perpendiculairement à une direction circonférentielle.

8. Liaison articulée selon l'une des revendications précédentes, **caractérisée par le fait que** les évidements (F1, F2) de la coquille de palier (30) ont la forme de secteurs de la surface interne d'un cylindre creux à section circulaire.

9. Support réglable (11) comportant une liaison articulée (10) selon l'une des revendications précédentes, dans lequel une lentille optique ou un réflecteur d'un phare est maintenu dans le support réglable (11).

10. Phare comportant un composant optique (18) maintenu dans un support réglable (11), **caractérisé par le fait que** le support (11) comporte une liaison articulée (10) selon l'une des revendications 1 à 8 et/ou est un support selon la revendication 9.
